Europäisches Patentamt

European Patent Office

Office européen des brevets

(19)

(11) Publication number: **0 055 782**

**A1**

(12) # EUROPEAN PATENT APPLICATION
published in accordance with Art. 158(3) EPC

(21) Application number: 81901898.7

(22) Date of filing: 07.07.81

Data of the international application taken as a basis:

(86) International application number:
PCT/JP81/00155

(87) International publication number:
WO82/00210 (21.01.82 82/03)

(51) Int. Cl.³: **G 05 B 19/403**

(30) Priority: 07.07.80 JP 92381/80

(43) Date of publication of application:
14.07.82 Bulletin 82/28

(84) Designated Contracting States:
DE FR GB

(71) Applicant: FUJITSU FANUC LIMITED
5-1, Asahigaoka, 3-chome
Hino-shi, Tokyo 191(JP)

(72) Inventor: KURAKAKE, Mitsuo Izumihaitsu 103
3-10, Tamadaira 3-chome
Hino-shi Tokyo 191(JP)

(74) Representative: Billington, Lawrence Emlyn et al,
Haseltine Lake & Co. 9 Park Square
Leeds LS1 2LH(GB)

(54) NUMERICAL CONTROL UNIT.

(57) A numerical control unit having: a main memory (3) for storing numerical control programs and the like, a main processor (1) for executing the data processing necessary for numerical control, and a main bus (2). In the unit, local buses (4a,4b) are coupled to the main bus (2) through buffer circuits (5a,5b), respectively, with respect to control axes, and axis-control circuits (8a,8b) are coupled to the local buses (4a,4b), respectively. In addition, coupled to the local buses are local processor units (6a,7a;6b,7b) for taking a part of the loading to the main processor (1), as required, according to the number of the processings in the main processor.

Fig. 1

EP 0 055 782 A1

DESCRIPTION

NUMERICAL CONTROL DEVICE

Technical Field

This invention relates to a numerical control device wherein local buses for respective controlled axes are connected to a main bus which is in turn connected to a main processor which executes data processing for numerical control, and wherein an axis control circuit is connected to each of the local buses. More particularly, the invention relates to a numerical control device which is so arranged that local processor units for bearing the load of the main processor can be connected to the local buses.

Background Art

In a conventional numerical control device which executes data processing for numerical control by relying upon the operational functions of a processor, the functions of the device can be extended to some extent only be adding or exchanging memory elements, such as a read-only memory, into which new functions (new control programs) have been written. It has been difficult, however, to realize a great extension in function, beyond the processing capacity of the built-in processor, without subjecting the existing components to a major modification, as by replacing the built-in processor with one having superior performance and speed. In consequence, it has not been easy to increase the number of controlled axes or to extend functionality to permit sophisticated position loop control, such as that which accompanies digitalization of servo control. It has thus not been possible to satisfy the diversified needs of users within a short delivery time and at low cost.

Accordingly, the object of the present invention is to provide a highly versatile numerical control device which enables functions to be extended with facility without requiring any modification in the existing component parts.

Disclosure of Invention

In accordance with the present invention, a numerical control device is constructed by connecting local buses for respective controlled axes to a main bus line connected to a main processor which executes data processing for numerical control, connecting an axis control circuit to each local bus, and connecting load-bearing local processor units to prescribed ones of the local buses when the number of cases to be processed by the main processor exceeds the processing capacity of the main processor. Specifically, the arrangement is such that connecting the local processor units to the local buses enables them to bear the load of the main processor, so that it is possible to realize an increase in the number of controlled axes or a functional extension such as more sophisticated position loop control, without reqiring any modification in the existing components. Consequently, by adopting a numerical control device whose standard specifications do not include local processor units, and then by attaching the local processor units when they are necessary, it is possible to enhance the versatility of the device by extending its functions so that the diversified needs of users can be met in a short period of time.

Brief Description of Drawings

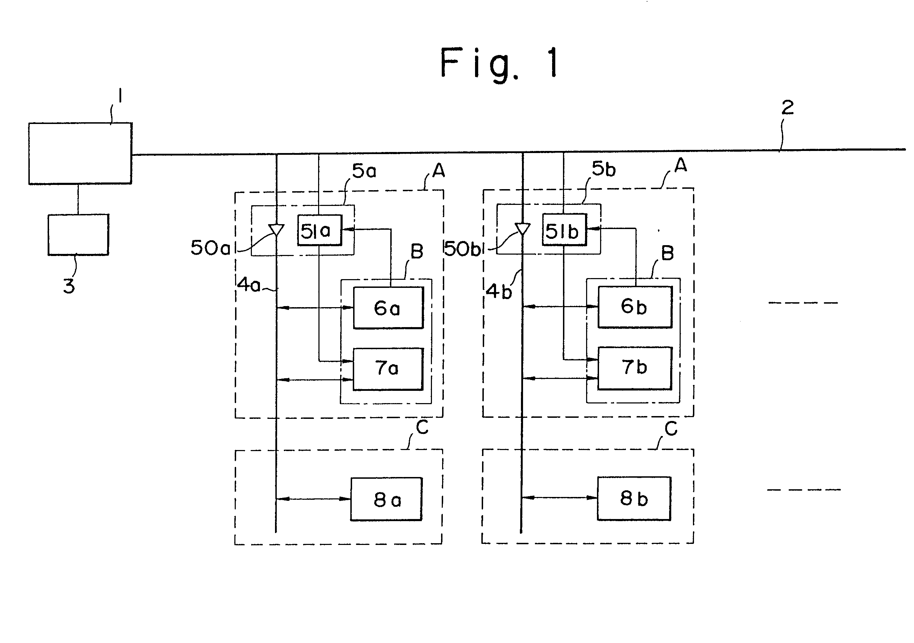

The Figure is a block diagram of a numerical control device illustrative of an embodiment of the present invention.

Best Mode for Carrying Out the Invention

A description will now be had in conjunction with the accompanying drawing to describe the present invention is greater detail.

The Figure is a block diagram illustrating an embodiment of the present invention, in which numerical 1 denotes a main processor, 2 a main bus, 3 a main memory, 4a, 4b local buses, 5a, 5b buffer circuits, 6a, 6b local processors, 7a, 7b local memories, and 8a, 8b axis control circuits. The buffer circuits 5a, 5b include respective buffer gates 50a, 50b for connecting the main bus 2 to the local buses 4a, 4b, and respective timing controllers 51a, 51b for controlling timing in such a manner that the corresponding local memories 7a, 7b can be accessed by both the main processor 1 and respective local processors 6a, 6b. Further, A, B and C represent circuit blocks. In particular, each circuit block B, comprising the local processor 6a or 6b and local memory 7a or 7b, constitutes a local processor unit.

The device of the present embodiment provides the local buses 4a, 4b that are isolated by means of the buffer circuits 5a, 5b from the main bus 2 connected to the main processor 1, and circuits such as the axis control circuits 8a, 8b which are allotted to respective ones of the controlled axes are connected to the respective local buses. Moreover, the arrangement is such that each local processor unit B, comprising the local processor 6a or 6b for bearing the load of the main processor 1, and the local memory 7a or 7b, can be suitably connected to the local buses 4a, 4b.

The main processor 1, without having the local processor units B connected thereto, executes processing for numerical control in accordance with the program road out of the main memory 3. The results of the processing operation are applied to the axis control circuits 8a, 8b through the buffer gates 50a, 50b and local buses 4a, 4b so that the prescribed numerical control operations can be carried out. When the local processor units B are connected, a portion of the load is borne by the local processors 6a, 6b. More specifically, the program to be executed by the local processors 6a, 6b and the arithmetic data is fed into the local memories 7a, 7b, and the local processors 6a, 6b control the axis control circuits on behalf of the main processor 1 in accordance with said program. In this case the local memories 7a, 7b can be accessed by the main processor 1. The reason for such an arrangement is to make possible control wherein the operation of the entire system is halted if a failure develops in, say, the axis control circuits 8a, 8b. This is accomplished by writing such an event into predetermined areas of the local memories 7a, 7b and having the main processor 1 read the same, the main processor responding by halting system operation. Another reason is to make it possible to transfer necessary data from the main memory 3 to the local memories 7a, 7b. With this embodiment the arrangement is not such as to allow the local processors 6a, 6b to access the main memory 3, but this is for the purpose of simplification only, and an arrangement is possible in which the main memory is accessible by the local processors.

In accordance with the foregoing construction of the present embodiment, the local processor units B are connected to the local buses 4a, 4b when the main processor 1 reaches the limit of its processing capacity, as may occur with an increase in the number of controlled axes. Thus processing allotted to the respective axes, such as acceleration-deceleration control and positional loop control, is borne by the local processors 6a, 6b to lighten the load borne by the main processor 1. This also enables enhancement of the position control loop function with respect to mechanical loads which exhibit vibration or backlash and the like, without increasing the load borne by the main processor. Thus the load borne by the main processor 1 can be alleviated by connecting the local processor units and having the local processors 6a, 6b execute the processing for enhancing the position control loop function.

In the device of the present embodiment, the circuitry is divided into the circuit blocks A, B, C, as illustrated in the Figure, and each block constitutes a discrete unit for mounting. As a result, the local processor units B may serve as optional equipment. Thus an advantage of the invention is that the system can be constructed inexpensively without the inclusion of the local processors when, say, the controlled axes are few in number.

Industrial Applicability

As described hereinabove, the present invention is so arranged that local processor units are added when the number of cases to be processed exceeds the processing capacity of the main processor, the additional local processor units lightening the load borne by the main processor. The present invention therefore is suitable for use when enhancing the functions of a numerical control device.

WHAT IS CLAIMED IS:

(1)   In a numerical control device having a main memory for storing a numerical control program and the like, a main processor which executes data processing for numerical control, and a main bus, a machine tool being controlled on the basis of the results of data processing, a numerical control device characterized in that a local bus for each controlled axis is connected to said main bus, an axis control circuit is connected to the local bus, and a local processor unit for bearing the load of said main processor is suitably connected to the local bus in accordance with the number of cases to be processed by said main processor.

(2)   A numerical control device according to claim 1, characterized in that a buffer circuit is provided between said main bus and the local bus.

(3)   A numerical control device according to claim 1 or claim 2, characterized in that said local processor unit has a local processor, and a memory which is accessible by the main processor and local processor.

Fig. 1

# INTERNATIONAL SEARCH REPORT

**0055782**

International Application No PCT/JP81/00155

## I. CLASSIFICATION OF SUBJECT MATTER (if several classification symbols apply, indicate all) [3]

According to International Patent Classification (IPC) or to both National Classification and IPC

Int. Cl.$^3$  G05B19/403

## II. FIELDS SEARCHED

### Minimum Documentation Searched [4]

| Classification System | Classification Symbols |
|---|---|
| IPC | G05B15/00, 19/00 |

### Documentation Searched other than Minimum Documentation to the Extent that such Documents are Included in the Fields Searched [5]

| | |
|---|---|
| Jitsuyo Shinan Koho | 1926 - 1981 |
| Kokai Jitsuyo Shinan Koho | 1971 - 1981 |

## III. DOCUMENTS CONSIDERED TO BE RELEVANT [14]

| Category * | Citation of Document, [16] with indication, where appropriate, of the relevant passages [17] | Relevant to Claim No. [18] |
|---|---|---|
| X | JP, A, 48-80974, 1973-10-30 <br> See page 1, right column, FUJITSU LIMITED | 1, 2 |
| X | JP, A, 55-39944, 1980-3-21 <br> See pages 3 to 5 (columns 8 to 11), <br> Mitsubishi Heavy Industries, Ltd. | 1, 2 |

\* Special categories of cited documents: [16]

"A" document defining the general state of the art

"E" earlier document but published on or after the international filing date

"L" document cited for special reason other than those referred to in the other categories

"O" document referring to an oral disclosure, use, exhibition or other means

"P" document published prior to the International filing date but on or after the priority date claimed

"T" later document published on or after the International filing date or priority date and not in conflict with the application, but cited to understand the principle or theory underlying the invention

"X" document of particular relevance

## IV. CERTIFICATION

| Date of the Actual Completion of the International Search [3] | Date of Mailing of this International Search Report [3] |
|---|---|
| September 25, 1981 (25.09.81) | October 5, 1981 (05.10.81) |
| International Searching Authority [1] | Signature of Authorized Officer [10] |
| Japanese Patent Office | |

Form PCT/ISA/210 (second sheet) (October 1977)